# EUROPEAN PATENT APPLICATION

(11) **EP 4 082 787 A1**
(43) Date of publication of application: **02.11.2022**
(21) Application number: 20904315.7
(22) Date of filing: 23.12.2020
(51) Int. Cl.: B32B 27/32, B32B 3/12

(54) **MULTILAYER BODY AND METHOD FOR PRODUCING SAME**

(30) Priority: 27.12.2019 JP 2019238138
(71) Applicant: Mitsui Chemicals, Inc., Tokyo 105-7122 (JP)
(72) Inventor: ISAKI, Takeharu, Sodegaura-shi, Chiba 299-0265 (JP); HIRANO, Taiki, Sodegaura-shi, Chiba 299-0265 (JP); MIZUMOTO, Kazuya, Sodegaura-shi, Chiba 299-0265 (JP)
(74) Representative: Hoffmann Eitle
(86) International application number: PCT/JP2020/048141
(87) International publication number: WO 2021/132321

(57) **Abstract**

The present invention discloses a multilayer body which comprises: a core member that has a plurality of hollow structural units which have at least one shape that is selected from the group consisting of a columnar shape, a polygonal columnar shape, a conical shape, a polygonal pyramidal shape, and a combination of two or more of these shapes, wherein the maximum width of cross-sectional shapes of the hollow structural units is from 3 to 15 mm; an adhesive layer that is arranged on at least one of the front surface and the back surface of the core member; and a unidirectional fiber-reinforced resin sheet that is arranged in contact with the adhesive layer, while containing a thermoplastic resin. The present invention also discloses a method for producing this multilayer body. This multilayer body is light in weight, while having excellent bending properties such as bending modulus of elasticity.

## Description

### Technical Field

The present invention relates to a lightweight laminate having excellent physical properties relating to bending (also referred to as "bending physical properties") such as a flexural modulus, and a method for producing the laminate.

### Background Art

As a lightweight and high-strength member, for example, a hollow member referred to as a honeycomb core or a honeycomb material is known. As such a honeycomb core or a honeycomb material, a plate-shaped member having a honeycomb-shaped hollow structure is known.

Patent Literature (hereinafter, referred to as PTL) 1 describes a laminated structure in which a fiber sheet and a thermoplastic resin film are bonded to at least one main surface of a hollow plate-shaped body made of a thermoplastic resin. The hollow plate-shaped body made of a thermoplastic resin is, for example, a honeycomb material. PTL 1 explains that this laminated structure is lightweight, and upon bending, protruding wrinkles or recesses due to buckling at the bent portion are less likely to be generated in this laminated structure.

PTL 2 describes a honeycomb sandwich panel made by disposing surface plates on both sides of a honeycomb core and integrally molding the plates to the core. Between the honeycomb core and the surface plate, a fiber reinforced resin layer with fibers arranged in one direction is integrally formed with the honeycomb sandwich panel.

### Citation List

### Patent Literature

PTL 1 Japanese Patent Application Laid-Open No. 2013-233796
PTL 2 Japanese Patent Application Laid-Open No. H7-180281

### Summary of Invention

### Technical Problem

The invention described in PTL 1 is on the premise that buckling occurs in a laminated structure, and an object of this invention is to prevent generation of protruding wrinkles caused by this buckling. PTL 1 thus made no studies on improving the bending physical properties to prevent buckling. The present inventors have found through their studies that this laminated structure is inferior in bending physical properties (for example, flexural modulus) in some cases.

Thermosetting resin such as epoxy resin is used for the fiber reinforced resin layer in the honeycomb sandwich panel described in PTL 2. The present inventors have found through their studies that when such a thermosetting resin is used for the fiber reinforced resin layer, it is difficult to bond the resin to the honeycomb core, and peeling occurs to reduce the bending characteristics in some cases.

An object of the present invention is to provide a lightweight laminate having excellent bending physical properties such as a flexural modulus, and a method for producing the laminate.

### Solution to Problem

As a result of diligent studies to achieve the above object, the present inventors have found that a laminate having a specific configuration is very effective, and have completed the present invention. The present invention is specified by the following matters.
[1] A laminate including:
   a core member including a plurality of hollow structure units each having a shape of at least one member selected from the group consisting of cylinders, polygonal prisms, cones, polygonal pyramids, and combinations thereof, in which a cross-sectional shape of the hollow structure unit has a maximum width of 3 to 15 mm;
   an adhesive layer disposed on at least one of a front surface and a back surface of the core member; and
   a unidirectional fiber reinforced resin sheet disposed in contact with the adhesive layer, the unidirectional fiber reinforced resin sheet containing a thermoplastic resin.
[2] The laminate according to [1], in which the core member has a thickness of 3 to 30 mm.
[3] The laminate according to [1], in which the core member and the adhesive layer each contain a thermoplastic resin.
[4] The laminate according to [3], in which the thermoplastic resins includes a polyolefin-based thermoplastic resin.
[5] The laminate according to [1], in which the core member includes a covering sheet that covers openings of the hollow structure unit, the openings being on sides of the front surface and the back surface of the core member.
[6] The laminate according to [1], in which the number of hollow structure units of the core member per unit area is 5,600 to 111,200 pieces/m².
[7] The laminate according to [1], in which a fiber in the unidirectional fiber reinforced resin sheet includes a carbon fiber.
[8] The laminate according to [1], in which the laminate has a flexural modulus of 10 to 100 GPa.
[9] The laminate according to [1], in which the adhesive layer is disposed on each of the front surface and the back surface of the core member, and the unidirectional fiber reinforced resin sheet is disposed in contact with the adhesive layer.
[10] A method for producing the laminate according to [1], the method including:
   applying an adhesive on one or both of a core member and a unidirectional fiber reinforced resin sheet, in which the core member includes a plurality of hollow structure units each having a shape of at least one member selected from the group consisting of cylinders, polygonal prisms, cones, polygonal pyramids, and combinations thereof, a cross-sectional shape of the hollow structure unit has a maximum width of 3 to 15 mm, and the unidirectional fiber reinforced resin sheet contains a thermoplastic resin;
   disposing the unidirectional fiber reinforced resin sheet on at least one of a front surface and a back surface of the core member via the adhesive; and
   performing heating to a temperature equal to or higher than a melting point of the adhesive.

### Advantageous Effects of Invention

The present invention is capable of providing a lightweight laminate having excellent bending physical properties such as a flexural modulus, and a method for producing the laminate.

### Brief Description of Drawings

FIG. 1A is a schematic sectional view illustrating an embodiment of a laminate of the present invention, and FIG. 1B is a schematic perspective view for explaining a state before a core member is bonded with unidirectional fiber reinforced resin sheets via adhesive layers;
FIG. 2 is a schematic perspective view for explaining the internal structure of the core member in the laminate illustrated in FIGS. 1A and 1B;
FIGS. 3Ato 3C are schematic views illustrating examples of the cross-sectional shape of a hollow structure unit of the core member in the present invention; and
FIGS. 4A to 4C are schematic cross-sectional views illustrating examples of the shape of the hollow structure unit of the core member in the present invention.

### Description of Embodiments

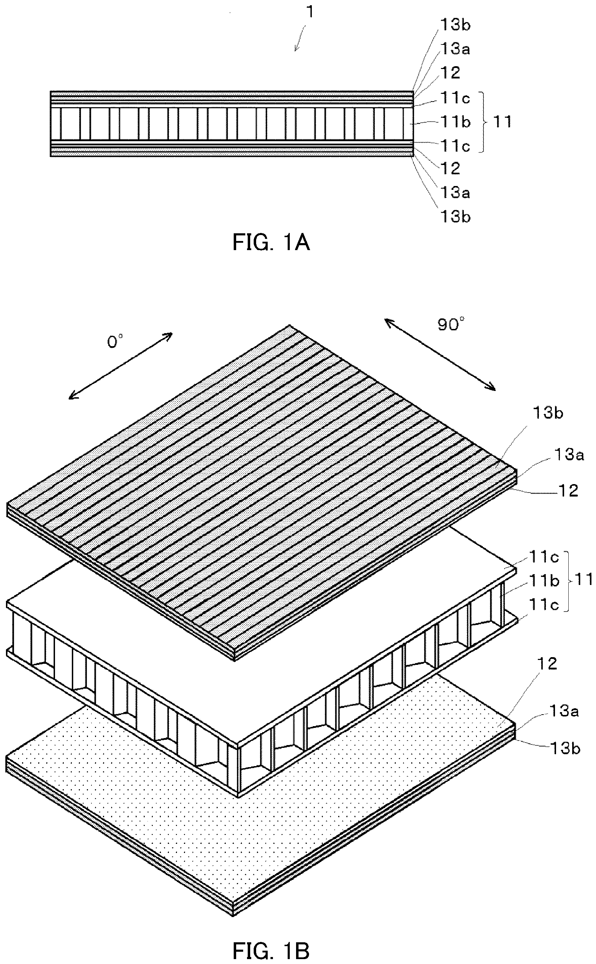

A laminate of the present invention includes 1) a core member including a plurality of hollow structure units having a specific shape; 2) at least one adhesive layer; and 3) at least one unidirectional fiber reinforced resin sheet containing a thermoplastic resin. FIG. 1A is a schematic sectional view illustrating an embodiment of the laminate of the present invention, and FIG. 1B is a schematic perspective view for explaining a state before the core member is bonded with the unidirectional fiber reinforced resin sheets via adhesive layers.

Laminate 1 illustrated in FIGS. 1A and 1B includes core member 11, adhesive layers 12 respectively disposed on the front surface and the back surface of core member 11, and unidirectional fiber reinforced resin sheets, each containing a thermoplastic resin, disposed to be in contact with respective adhesive layers 12 (in the embodiment illustrated in FIGS. 1A and 1B, each unidirectional fiber reinforced resin sheet is a laminate of inner unidirectional fiber reinforced resin sheet 13a and outer unidirectional fiber reinforced resin sheet 13b). In other words, laminate 1 in the present embodiment has a sandwich structure in which core member 11 is sandwiched between laminates each composed of unidirectional fiber reinforced resin sheets 13a and 13b. Adhesive layers 12 are for bonding inner unidirectional fiber reinforced resin sheets 13a with the front surface and the back surface of core member 11, respectively. In laminate 1 illustrated in FIGS. 1A and 1B, adhesive layers 12 respectively are disposed on the front surface and the back surface of core member 11; however, the present invention is not limited thereto. The laminate of the present invention may have a configuration such that the laminate includes adhesive layer 12 and a unidirectional fiber reinforced resin sheet which are disposed on at least one of the front surface and the back surface of core member 11.

Laminate 1 illustrated in FIGS. 1A and 1B has a five-layer structure because laminate 1 includes adhesive layer 12 and unidirectional fiber reinforced resin sheet (in FIGS. 1A and 1B, the unidirectional fiber reinforced resin sheet is a laminate of unidirectional fiber reinforced resin sheets 13a and 13b) on each of the front surface and the back surface of core member 11. Specifically, the five-layer structure is of "unidirectional fiber reinforced resin sheet / adhesive layer / core member / adhesive layer / unidirectional fiber reinforced resin sheet." However, the present invention is not limited to this five-layer structure. For example, the laminate may have a three-layer structure with adhesive layer 12 and a unidirectional fiber reinforced resin sheet on only one of the front surface and the back surface of core member 11. In this case, the three-layer structure specifically is of "unidirectional fiber reinforced resin sheet / adhesive layer / core member."

### Unidirectional Fiber Reinforced Resin Sheet

FIGS. 1A and 1B illustrate, as unidirectional fiber reinforced resin sheets for holding core member 11 therebetween, laminates having the following configuration (configuration corresponding to examples 1 to 3 described below): each laminate is composed of inner unidirectional fiber reinforced resin sheet 13a and outer unidirectional fiber reinforced resin sheet 13b (that is, laminate in which two sheets are integrated). However, the present invention is not limited to this configuration. For example, a laminate of three or more unidirectional fiber reinforced resin sheets may be used, or only one unidirectional fiber reinforced resin sheet (non-laminate) may be used. The laminate in which a plurality of unidirectional fiber reinforced resin sheets are integrated may have any structure. Such a laminate may be a cross-ply laminate, an angle-ply laminate, a fabric composed of unidirectional fiber reinforced resin sheets in which the unidirectional fiber reinforced resin sheets are woven into a plain weave fabric or twill weave fabric, or a random sheet composed of unidirectional fiber reinforced resin sheets in which small pieces of the unidirectional fiber reinforced resin sheet are randomly integrated. In particular, a non-laminate, cross-ply laminate, and angle-ply laminate are preferred from the viewpoint of achieving both lightness and bending physical properties. A cross-ply laminate means a laminate in which unidirectional fiber-reinforced resin sheets are stacked with the respective fiber directions thereof are orthogonal to each other, and an angle-ply laminate means a laminate in which unidirectional fiber-reinforced resin sheets are stacked with the respective fiber directions thereof are at an arbitrary angle.

In FIGS. 1A and 1B, the fiber direction of outer unidirectional fiber reinforced resin sheet 13b is 0°, and the fiber direction of inner unidirectional fiber reinforced resin sheet 13a is 0° or 90° (configuration corresponding to examples 1 to 3 described below). However, the present invention is not limited to this configuration. Unidirectional fiber reinforced resin sheets 13a and 13b may have any fiber direction as necessary. In addition, in FIGS. 1A and 1B, the fiber direction of inner unidirectional fiber reinforced resin sheet 13a on the front surface side of core member 11 is the same as the fiber direction of inner unidirectional fiber reinforced resin sheet 13a on the back surface side of core member 11; and the fiber direction of outer unidirectional fiber reinforced resin sheet 13b on the front surface side of core member 11 is the same as the fiber direction of outer unidirectional fiber reinforced resin sheet 13b on the back surface side of core member 11 (configuration corresponding to examples 1 to 3 described below). These fiber directions may be different from each other as necessary.

The types of fibers and the thermoplastic resin contained in the unidirectional fiber reinforced resin sheet are not limited. As the thermoplastic resin, an olefin-based resin is preferred, and a polypropylene-based resin is more preferred. A unidirectional fiber reinforced resin sheet containing a thermoplastic resin is more likely to increase the bending characteristics. Further, when the thermoplastic resin is an olefin-based resin (more preferably a polypropylene-based resin), the bending characteristics are particularly improved. The thermoplastic resin and fibers contained in the unidirectional fiber reinforced resin sheet will be described in detail below.

The thickness of a unidirectional fiber reinforced resin sheet (when a laminate of a plurality of unidirectional fiber reinforced resin sheets are used, the thickness of the laminate) is not limited and is appropriately selected depending on the thickness of core member 11, but the thickness of the unidirectional fiber reinforced resin sheet is preferably small from the viewpoint of reducing the weight of the entire laminate. The thickness of the unidirectional fiber reinforced resin sheet is preferably 0.05 to 1.0 mm, more preferably 0.1 to 0.5 mm.

### Core Member

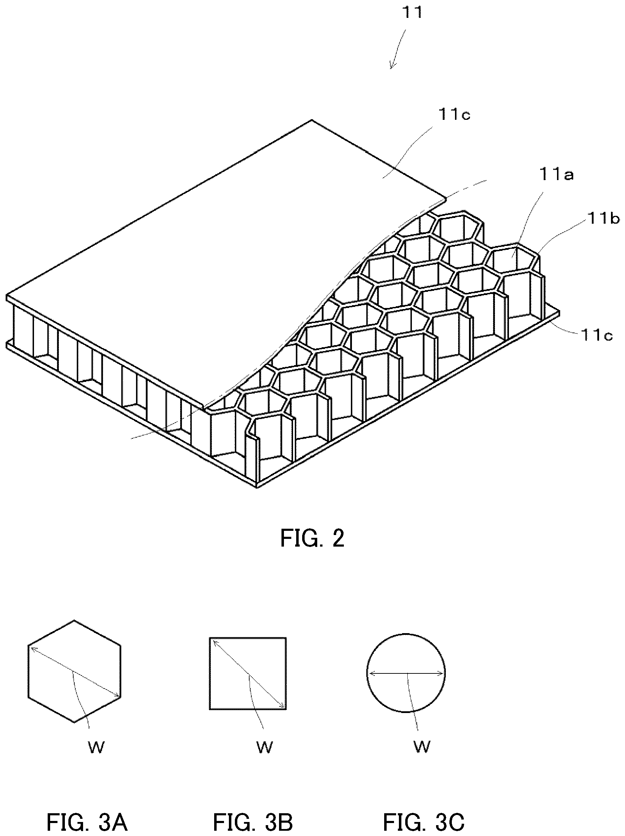

FIG. 2 is a schematic perspective view for explaining the internal structure of the core member in the laminate illustrated in FIGS. 1A and 1B. As illustrated in FIG. 2, core member 11 in the present embodiment is a plate-shaped member having a honeycomb-shaped cross section and including a plurality (specifically, a large number) of hollow structure units 11a each having a hexagonal prism shape (that is, polygonal prism shape). Hollow structure unit 11a illustrated in FIG. 2 is formed by surrounding the space thereof with wall material for the hollow structure (herein also referred to as "hollow structure wall material) 11b. The openings, on the front surface side and the back surface side of the core member, of hollow structure unit 11a are covered with covering sheet 11c (for example, a laminated sheet).

Hollow structure unit 11a of core member 11 illustrated in FIG. 2 has a hexagonal prism shape as described above. However, the present invention is not limited to this configuration. Hollow structure unit 11a may be any hollow structure unit having a shape of at least one member selected from the group consisting of cylinders, polygonal prisms, cones, polygonal pyramids, and combinations thereof. Two or more types of hollow structure units 11a may be mixed in core member 11.

FIGS. 3A to 3C are schematic views illustrating examples of the cross-sectional shape of the hollow structure unit of the core member in the present invention (the cross-sectional shape of the surface orthogonal to the depth direction of hollow structure unit 11a). The cross-section of hollow structure unit 11a may have a shape of, for example, a hexagon (within the honeycomb shape illustrated in FIG. 2) as illustrated in FIG. 3A, a quadrangle as illustrated in FIG. 3B, or a circle as illustrated in FIG. 3C. Further, any other shape is possible.

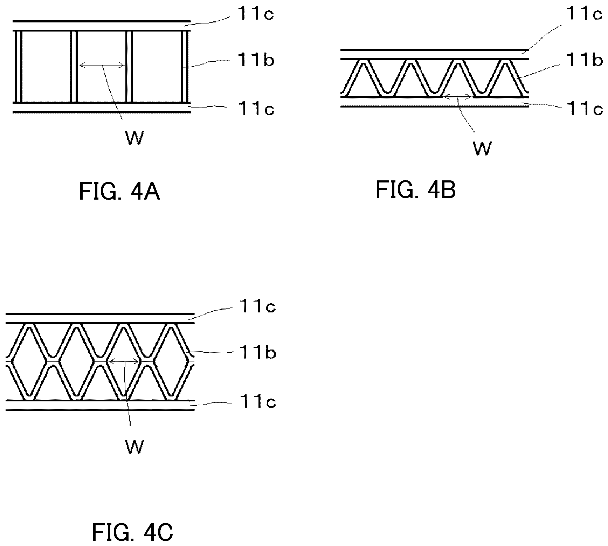

In the present invention, the maximum width of the cross-sectional shape of hollow structure unit 11a of core member 11 is 3 to 15 mm, preferably 4 to 9 mm. This "maximum width of the cross-sectional shape" means the length of the longest line segment that can be drawn inside the cross-sectional shape. For example, in the hexagon illustrated in FIG. 3A or the quadrangle illustrated in FIG. 3B, the diagonal line of the polygon is the maximum width W of the cross-sectional shape. In the circle illustrated in FIG. 3C, the diameter thereof is the maximum width W of the cross-sectional shape. When the size of the cross-sectional shape changes depending on the depth as in FIGS. 4B and 4C (see below), the maximum width W of the cross-sectional shape in the present invention is the maximum width of the cross-sectional shape of the largest part of the unit. The maximum width of the cross-sectional shape being equal to or less than the above upper limit is preferred because the compressive elastic modulus and the compressive strength of core member 11 are more likely to increase. The maximum width of the cross-sectional shape being equal to or more than the above lower limit is preferred because buckling and local denting of core member 11 are less likely to occur, and the bending physical properties is more likely to increase.

FIGS. 4A to 4C are schematic cross-sectional views illustrating examples of the shape of the hollow structure unit of core member 11 in the present invention. Hollow structure unit 11a of the present invention has a shape of at least one member selected from the group consisting of cylinders, polygonal prisms, cones, polygonal pyramids, and combinations thereof. For example, the hollow structure unit may have a shape of a polygonal prism or cylinder whose width in the cross section is uniform as illustrated in FIG. 4A, or a cone or polygonal pyramid whose width in the cross section gradually changes as illustrated in FIG. 4B. In addition, the hollow structure unit may have a shape of a two-layer structure such that two cones or two polygonal pyramids are combined in a vertically symmetric manner as illustrated in FIG. 4C.

In the present invention, it is preferable that plurality of hollow structure units 11a are regularly arranged in core member 11. The structure of hollow structure units 11a is preferably, for example, a honeycomb structure whose cross section is composed of hexagons (or any other polygons or circles), a conical structure whose cross section is composed of circles (single cone structure), and a two-layer structure such that two cones are repeatedly combined in a vertically symmetric manner (double cone structure), or a lattice structure whose cross section is composed of quadrangles (or any other polygons). In particular, the honeycomb structure is the most preferred. The honeycomb structure typically means a honeycomb-like structure in which a plurality of hollow structure units are arranged. Disposing hollow structure units 11a regularly is preferred because the compressive elastic modulus and the compressive strength of core member 11 are more likely to increase, and as a result, the bending physical properties of the laminate is more likely to increase.

The number of hollow structure units 11a of core member 11 per unit area is preferably 5,600 to 111,200 pieces/m², more preferably 14,000 to 72,000 pieces/m². The number of hollow structure units 11a per unit area being equal to or less than the above upper limit is preferred because the weight of core member 11 is more likely to decrease. The number of hollow structure units 11a per unit area being equal to or more than the above lower limit is preferred because the compressive elastic modulus and the compressive strength of core member 11 are more likely to increase, and as a result, the bending physical properties of the laminate is more likely to increase.

As described above, core member 11 illustrated in FIG. 2 includes covering sheet 11c that covers the openings on the front surface side and the back surface side of hollow structure units 11a. This is a preferred embodiment; however, the present invention is not limited thereto. Core member 11 without covering sheet 11c may be used as necessary.

The weight (mass per unit area) of core member 11 is preferably 500 to 4,000 g/m², more preferably 800 to 3,000 g/m².

The apparent density of core member 11 is preferably 0.10 to 0.50 g/cm², and more preferably 0.15 to 0.30 g/cm² from the viewpoint of achieving both the weight reduction and bending physical properties of the laminate. The apparent density can be obtained by dividing the mass per unit area by the thickness.

The type of material constituting core member 11 (for example, the hollow structure wall material 11b and covering sheet 11c) is not limited. From the viewpoint of weight reduction and adhesiveness to the unidirectional fiber reinforced resin sheet, a core member made of a resin is preferred, and a core member containing a thermoplastic resin is more preferred. Specific examples of the material include thermoplastic resins such as olefin-based resins, polyamide-based resins, polyester-based resins, and polyimide-based resins. In particular, an olefin-based resin is preferred, and a polypropylene-based resin is more preferred from the viewpoint of weight reduction.

The thickness of core member 11 is not limited, but a larger thickness is desirable for obtaining high rigidity. However, if the thickness is too large, the core member would have an increased weight, and largely occupy a space, thus the thickness can be appropriately selected according to the intended application. The thickness of core member 11 is preferably 3 to 30 mm, more preferably 3.5 to 20 mm from the viewpoint of achieving both the weight reduction and the bending physical properties.

### Adhesive Layer

In the present invention, an adhesive layer is for bonding and integrating core member 11 with the unidirectional fiber reinforced resin sheet (or inner unidirectional fiber reinforced resin sheet 13a when a laminate of two or more unidirectional fiber reinforced resin sheets is used). The type of adhesive for the layer and the thickness of the layer are not limited as long as the adhesive layer can bond core member 11 with the unidirectional fiber reinforced resin sheet.

The adhesive is preferably a hot-melt adhesive. The melting point of the adhesive is preferably 40 to 160°C, more preferably 60 to 140°C from the viewpoint that core member 11 can be bonded at a temperature at which core member 11 is not melted and further at a temperature within a range such that core member 11 is not thermally deformed.

The type of the adhesive is not limited, but an adhesive containing a thermoplastic resin is preferred. As the thermoplastic resin, an olefin-based resin is preferred, and a polypropylene-based resin is more preferred. Specific types of adhesives include olefin-based adhesives, epoxy-based adhesives, acrylic-based adhesives, and urethane-based adhesives. In particular, an olefin-based adhesive is preferred. Further, it is preferable that the adhesive and the unidirectional fiber reinforced resin sheet contain the same type of resin because the adhesiveness is more likely to increase. Specifically, when the adhesive and the unidirectional fiber reinforced resin sheet each contain a thermoplastic resin, the adhesive and the unidirectional fiber reinforced resin sheet may each contain an olefin-based resin. Similarly, it is preferable that the adhesive and core member 11 contain the same type of resin because the adhesiveness is more likely to increase.

The adhesive layer may have any thickness as long as core member 11 and the unidirectional fiber reinforced resin sheet can be bonded to each other. Specifically, the thickness of an adhesive layer is preferably 1 µm to 1,000 µm, more preferably 1 µm to 100 µm. During the production of the laminate of the present invention, when core member 11 is pressure-bonded with the unidirectional fiber reinforced resin sheet via an adhesive layer by hot press or the like, the adhesive layer becomes very thin due to this pressure (or pressure and heating) in some cases. Therefore, in view of such cases, the thickness of the adhesive layer may be less than 1 µm.

### Fiber Reinforced Resin Composition

In the present invention, the fiber reinforced resin composition constituting the unidirectional fiber reinforced resin sheet is a composition containing a thermoplastic resin and fibers.

In particular, the fiber reinforced resin composition preferably contains 20 to 80 parts by mass of polymer (I) having a melting point and/or a glass transition temperature of 50 to 300°C; and 20 to 80 parts by mass of reinforcing fiber (C) [with the proviso that the total of components (I) and (C) is 100 parts by mass]. The amount of the polymer (I) is preferably 25 to 70 parts by mass, more preferably 30 to 65 parts by mass, particularly preferably 35 to 60 parts by mass, and most preferably 40 to 60 parts by mass. The amount of the reinforcing fiber (C) is preferably 30 to 75 parts by mass, more preferably 35 to 70 parts by mass, particularly preferably 35 to 60 parts by mass, and most preferably 40 to 60 parts by mass.

The polymer (I) may be any type of thermoplastic resin that has a melting point and/or glass transition temperature of 50 to 300°C. A polyolefin containing an olefin unit having 2 to 20 carbon atoms is preferred.

For preparing a fiber reinforced resin composition, the reinforcing fiber (C) is usually used as a reinforcing fiber bundle. The reinforcing fiber bundle preferably contains propylene-based resin (A) which preferably contains 50 mol% or more of a constituent unit derived from propylene, propylene-based resin (B) that has at least a carboxylate bonded to the polymer chain thereof, and the reinforcing fiber (C).

The propylene-based resin (A) is a resin having a structural unit derived from propylene, and is typically a polymer of propylene. The propylene-based resin (A) may be a copolymer containing a structural unit derived from at least one type of olefin or polyene selected from α-olefins, conjugated dienes, and non-conjugated dienes.

Specific examples of the α-olefins include α-olefins (excluding propylene) having 2 to 20 carbon atoms, such as ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. In particular, 1-butene, ethylene, 4-methyl-1-pentene and 1-hexene are preferred, and 1-butene and 4-methyl-1-pentene are more preferred.

Specific examples of the conjugated dienes and non-conjugated dienes include butadiene, ethylidene norbornene, dicyclopentadiene, and 1,5-hexadiene.

When the propylene-based resin (A) is a copolymer of propylene and another monomer, the amount of the structural unit derived from propylene is preferably 50 mol% or more, more preferably 50 to 99 mol%, particularly preferably, 55 to 98 mol%, and most preferably 60 to 97 mol%.

The propylene-based resin (A) preferably have a Shore A hardness of 60 to 90, or a Shore D hardness of 45 to 65. The Shore A hardness is more preferably 65 to 88, particularly preferably 70 to 85. The Shore D hardness is more preferably 48 to 63, particularly preferably 50 to 60.

The propylene-based resin (A) preferably has more than 60 mass% and 100 mass% or less of propylene-based resin component (A-1) having a weight average molecular weight of more than 50,000, and 0 to less than 40 mass% of propylene-based resin component (A-2) having a weight average molecular weight of 100,000 or less (with the proviso that the total of components (A-1) and (A-2) is 100 mass%, and the weight average molecular weights thereof satisfy (A-1) > (A-2)). The content of propylene resin component (A-1) is more preferably more than 70 mass% and 100 mass% or less, and the particularly preferably 73 to 100 mass%.

The difference in the weight average molecular weight between propylene-based resin component (A-1) and propylene-based resin component (A-2) is preferably 20,000 to 300,000, more preferably 30,000 to 200,000, and particularly preferably 35,000 to 200,000.

The melting point or glass transition temperature of the propylene-based resin (A) is typically 0 to 165°C. Resins with no melting point may also be used.

The amount of the propylene-based resin (B) is preferably 3 to 50 parts by mass, more preferably 5 to 45 parts by mass, and particularly preferably 10 to 40 parts by mass with respect to 100 parts by mass of the propylene-based resin (A).

The propylene-based resin (B) is a propylene-based resin having at least a carboxylate bonded to the polymer chain thereof. The carboxylate is effective in enhancing the interaction with the reinforcing fiber, particularly with carbon fiber.

Examples of the material for the propylene-based resin (B) include polypropylene and copolymers of propylene and one or more types of α-olefins, represented by ethylene/propylene copolymer, propylene/1-butene copolymer, and ethylene/propylene/1-butene copolymer. The examples of the material also include monomers having a neutralized or not neutralized carboxylic acid group and monomers having a saponified or not saponified carboxylic acid ester group. Specific examples of the olefin to be used are the same as those described as the copolymerization components of the propylene-based resin (A).

Examples of the monomer having a carboxylic acid group that is neutralized or not neutralized and the monomer having a carboxylic acid ester group that is saponified or not saponified include ethylene-based unsaturated carboxylic acids and anhydrides thereof. The examples also include esters of the above compounds, and compounds having unsaturated vinyl groups other than olefins.

Specific examples of the ethylene-based unsaturated carboxylic acid include (meth)acrylic acid, maleic acid, fumaric acid, tetrahydrophthalic acid, itaconic acid, citraconic acid, crotonic acid, and isocrotonic acid. Specific examples of the anhydride include nadic acid (trademark, (endosis-bicyclo [2.2.1] hept-5-ene-2,3-dicarboxylic acid)), maleic anhydride, and citraconic anhydride.

Specific examples of the monomers having unsaturated vinyl groups other than olefins include (meth)acrylic acid esters such as methyl (meth)acrylate, ethyl (meth)acrylate, propyl (meth)acrylate, n-butyl (meth)acrylate, i-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobolonyl (meth)acrylate, dicyclopentanyl (meth)acrylate, dicyclopentenyl (meth)acrylate, dimethylaminoethyl (meth)acrylate, and diethylaminoethyl (meth)acrylate; vinyls having a hydroxyl group, such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; vinyls having an epoxy group, such as glycidyl (meth)acrylate and methyl glycidyl (meth)acrylate; vinyls having an isocyanate group, such as vinyl isocyanate and isopropenyl isocyanate; aromatic vinyls, such as styrene, α-methylstyrene, vinyltoluene, and t-butylstyrene; amides such as acrylamide, methacrylamide, N-methylolmethacrylamide, N-methylolacrylamide, diacetoneacrylamide, and maleic acid amide; vinyl esters, such as vinyl acetate and vinyl propionate; aminoalkyl (meth)acrylates, such as N, N-Dimethylaminoethyl (meth)acrylate, N, N-diethylaminoethyl (meth)acrylate, N, N-dimethylaminopropyl (meth)acrylate, N, N-dipropylaminoethyl (meth)acrylate, N, N-dibutylaminoethyl (meth)acrylate, and N, N-dihydroxyethylaminoethyl (meth)acrylate; unsaturated sulfonic acids, such as styrene sulfonic acid, sodium styrene sulfonic acid, 2-acrylamide-2-methylpropane sulfonic acid; and unsaturated phosphoric acids, such as mono(2-methacryloyloxyethyl) acid phosphate and mono(2-acryloyloxyethyl) acid phosphate.

These monomers may be used individually or in combination. In particular, acid anhydrides are preferred, and maleic anhydride is particularly preferred.

The content of the carboxylic acid group in the propylene-based resin (B) can be determined by NMR or IR. The content can also be evaluated by the acid value. The acid value of the propylene-based resin (B) is preferably 10 to 100 mg-KOH/g, more preferably 20 to 80 mg-KOH/g, particularly preferably 25 to 70 mg-KOH/g, and most preferably 25 to 65 mg-KOH/g.

The weight average molecular weight of the propylene-based resin (B) is preferably 1,000 to 100,000, more preferably 2,000 to 80,000, particularly preferably 5,000 to 50,000, and most preferably 5,000 to 30,000.

Regarding the relationship between the weight average molecular weights of the propylene-based resin (A) and the propylene-based resin (B), it is preferable that the weight average molecular weight of the propylene-based resin (A) is larger. Specifically, the difference in the weight average molecular weight between the propylene-based resin (A) and the propylene-based resin (B) is preferably 10,000 to 380,000, more preferably 120,000 to 380,000, and particularly preferably 130,000 to 380,000.

The weight average molecular weight is determined by gel permeation chromatography (GPC) in the present invention.

The melt flow rate (ASTM 1238 standard, 230°C, 2.16 kg load) of the propylene-based resin (B) is preferably 3 to 500 g/10min. The lower limit of the melt flow rate is more preferably 5 g/10min, and particularly preferably 7 g/10min. The upper limit of the melt flow rate is more preferably 400 g/10min, and particularly preferably 350 g/10min.

As a preferred melt flow rate range, the measured value under the ASTM 1238 standard, 190°C and 2.16 kg load may be in the same numerical range as described above.

The amount of the propylene-based resin (B) is preferably 3 to 50 parts by mass, more preferably 5 to 45 parts by mass, and particularly preferably 7 to 40 parts by mass with respect to 100 parts by mass of the propylene-based resin (A).

The content of the propylene-based resin (A) and the propylene-based resin (B) in the reinforcing fiber bundle is preferably 0.3 to 5 mass%. The lower limit of the content is more preferably 0.4 mass%, and the upper limit of the content is more preferably 4 mass%, particularly preferably 3 mass%.

The reinforcing fiber bundle may include other components in combination, in addition to propylene-based resin (A) and propylene resin (B) described above. For example, when a propylene-based resin in the emulsion form is used for the reinforcing fiber bundle, a surfactant for stabilizing the emulsion may be added separately. The amount of the additional components is preferably 10 parts by mass or less, more preferably 5 mass% or less, and particularly preferably 2 mass% or less, with respect to 100 parts by mass of the total of propylene-based resin (A) and propylene resin (B).

Examples of the reinforcing fiber (C) include carbon fiber and glass fiber. As the reinforcing fiber (C), carbon fiber is preferred from the viewpoint of further improving the bending physical properties. Specifically, as the carbon fiber, PAN-based, pitch-based, rayon-based and other carbon fibers are preferred from the viewpoint of improving mechanical characteristics, and PAN-based carbon fiber is more preferred from the viewpoint of balancing between strength and elastic modulus.

The average fiber diameter of the reinforcing fiber (C) is not limited. However, from the viewpoint of mechanical characteristics and surface appearance, the average fiber diameter is preferably 1 to 20 µm, more preferably 3 to 15 µm. The number of single threads of the reinforcing fiber bundle is not limited. The number is typically 100 to 350,000, preferably 1,000 to 250,000, and more preferably 5,000 to 220,000.

The fiber reinforced resin composition usually contains matrix resin (X). The matrix resin (X) is preferably propylene-based polymer (D) described below. In addition, the following thermoplastic resins may be used: polycarbonate resin, styrene-based resin, polyamide resin, polyester resin, polyphenylene sulfide resin (PPS resin), modified polyphenylene ether resin (modified PPE resin), polyacetal resin (POM) resin, liquid crystal polyester, polyarylate, acrylic resin such as polymethylmethacrylate resin (PMMA), vinyl chloride, polyimide (PI), polyamideimide (PAI), polyetherimide (PEI), polysulfone, polyethersulfone, polyketone, polyetherketone, polyetheretherketone (PEEK), polyethylene, polypropylene, polybutene, polyolefin such as poly(4-methyl-1-pentene), modified polyolefin, phenol resin, and phenoxy resin. Furthermore, copolymers such as the following can also be used: ethylene/propylene copolymer, ethylene/1-butene copolymer, ethylene/propylene/diene copolymer, ethylene/carbon monoxide/diene copolymer, ethylene/ethyl (meth)acrylate copolymer, ethylene/glycidyl (meth)acrylate copolymer, and ethylene/vinyl acetate/glycidyl (meth)acrylate copolymer. These polymers may be used individually or in combination. A polyolefin-based resin having a low polarity is preferred, in particular, an ethylene-based polymer or a propylene-based polymer is preferred from the viewpoint of cost and weight reduction, and propylene-based resin (D) described below is more preferred. In other words, a propylene-based resin composition containing a reinforcing fiber bundle is preferably used.

The propylene-based resin (D) may be an unmodified propylene-based resin, or may contain a modified propylene-based resin, containing a carboxylic acid structure or a carboxylate structure, obtained by a method such as modification. The propylene-based resin (D) containing the modified propylene-based resin is preferred. The mass ratio of the resins (unmodified/modified ratio) is preferably 80/20 to 99/1, more preferably 89/11 to 99/1, particularly preferably 89/11 to 93/7, and most preferably 90/10 to 95/5. As the type of propylene-based resin (D), the types described above in the description of the propylene-based resin (A) and the propylene-based resin (B) are preferred. The propylene-based resin (D) is, for example, a propylene polymer referred to as homopolypropylene, random polypropylene, block polypropylene, or modified polypropylene.

The weight average molecular weight of propylene-based resin (D) preferably has the following relationship with the weight average molecular weights of the propylene-based resin (A) and the propylene-based resin (B) described above.

Propylene-based resin (A) > Propylene-based resin (D) > Propylene-based resin (B)

The weight average molecular weight of propylene-based resin (D) is preferably 50,000 to 350,000, more preferably 100,000 to 330,000, and particularly preferably 150,000 to 320,000. The difference in the weight average molecular weight between the propylene-based resin (A) and propylene-based resin (D) is preferably 10,000 to 400,000, more preferably 20,000 to 200,000, and particularly preferably 20,000 to 100,000.

The tacticity of propylene-based resin (D) is not limited, but is preferably isotactic or syndiotactic.

The fiber reinforced resin composition contains fiber (reinforcing fiber (C) and the like) and resin (propylene-based resin (D) and the like). The amount of the fiber (C) is preferably 25 to 75 parts by mass, more preferably 30 to 68 parts by mass, and particularly preferably 35 to 65 parts by mass. The amount of the resin is preferably 25 to 75 parts by mass, more preferably 32 to 70 parts by mass, and particularly preferably 35 to 65 parts by mass (with the proviso that the total of reinforcing fiber (C) and matrix resin (X) is 100 parts by mass.)

The melting point or glass transition temperature of the resin contained in the fiber reinforced resin composition is preferably 50 to 300°C. The lower limit thereof is more preferably 70°C, particularly preferably 80°C, and the upper limit thereof is more preferably 280°C, particularly preferably 270°C, and most preferably 260°C. The melting point is preferably within these ranges, in particular, the upper limit of the melting point is preferably 250°C, more preferably 240°C.

The resin contained in the fiber reinforced resin composition preferably has a carboxylic acid group. With the proviso that the total of the reinforcing fiber (C) and the polymer (I) contained in the fiber reinforced resin composition is 100 parts by mass, the content of the structural unit containing a carboxylic acid group is preferably 0.010 to 0.045 parts by mass, more preferably 0.012 to 0.040 parts by mass, and particularly preferably 0.015 to 0.035 parts by mass. Examples of the structural unit containing a carboxylic acid group include structural units derived from a carboxylic acid group and from a carboxylate contained in resins such as the propylene-based resin (A), the propylene-based resin (B), and the propylene-based resin (D) described above.

When the resin in the fiber reinforced resin composition contains a carboxylic acid group, the content of the group can also be evaluated by the acid value. The acid value is preferably 0.1 to 0.55 mg-KOH/g, more preferably 1.12 to 0.45 mg-KOH/g, and particularly preferably 0.13 to 0.40 mg-KOH/g.

The melt flow rate (ASTM 1238 standard, 230°C, 2.16 kg load) of the resin in the fiber reinforced resin composition is preferably 1 to 500 g/10min, more preferably 3 to 300 g/10min, and particularly preferably 5 to 100 g/10min. The weight average molecular weight of the resin is preferably 50,000 to 400,000, more preferably 100,000 to 370,000, and particularly preferably 150,000 to 350,000.

The fiber reinforced resin composition may contain a dye (II) that absorbs light having a wavelength of 300 to 3,000 µm. As the dye (II), any known dye can be used. The dye (II) is preferably, for example, a carbon-based dye, more preferably carbon black.

When the dye (II) is contained, the content thereof is preferably 0.01 to 5 mass% based on the total 100 mass% of the fiber reinforced resin composition. The lower limit of the content is more preferably 0.1 mass%, particularly preferably 0.2 mass%. The upper limit of the content is more preferably 3 mass%, particularly preferably 2 mass%.

The unidirectional fiber reinforced resin sheet in the present invention is typically a sheet-shaped molded product of a unidirectional fiber reinforced resin in which continuous fibers are aligned in one direction and composited with a resin. In an exemplary method for producing the unidirectional fiber reinforced resin sheet, an opened fiber bundle is aligned and then brought into contact with the molten matrix resin (X). Single unidirectional fiber reinforced resin sheet may be used alone, or a laminate of unidirectional fiber reinforced resin sheets produced by stacking and integrating the multiple sheets may be used.

### Laminate

The laminate of the present invention includes the unidirectional fiber reinforced resin sheet, the core member, and the adhesive layer described above.

The apparent density of the laminate of the present invention is preferably 0.055 to 0.58 g/cm³, and more preferably 0.08 to 0.58 g/cm³ from the viewpoint of achieving both the weight reduction and bending physical properties of the laminate. The apparent density of the laminate can be adjusted, for example, by changing the apparent density of the core member, the thickness of the laminate, or the pressing conditions.

The thickness (overall thickness) of the laminate of the present invention is preferably 3 to 32 mm, more preferably 3 to 22 mm.

The specific level of the flexural modulus of the laminate of the present invention is not limited, and may be adjusted to the level most suitable for the specific application in which the laminate is used. The flexural modulus (MD direction) according to JIS K7171 is preferably 10 to 100 GPa, more preferably 12 to 60 GPa. The flexural modulus of the laminate can be adjusted, for example, by changing the number of stacked unidirectional fiber reinforced resin sheets.

The specific level of the flexural strength in the laminate in the present invention is not limited, and may be adjusted to the level most suitable for the specific application in which the laminate is used. The flexural strength (MD direction) according to JIS K7171 is preferably 70 to 500 MPa, more preferably 100 to 450 MPa. The flexural strength of the laminate can be adjusted, for example, by changing the number of stacked unidirectional fiber reinforced resin sheets.

The specific level of the impact resistance of the laminate in the present invention is not limited, and may be adjusted to the level most suitable for the specific application in which the laminate is used. Usually, in a high rate impact test according to the ASTM standard, the energy at the puncture point is preferably 8J or more, and more preferably 10J or more. On the other hand, higher energy at the puncture point is obviously preferred, but if the impact strength is too high, unexpected problems may occur. Therefore, the preferable upper limit is 20J, and the more preferable upper limit is 15J.

### Method of Producing Laminate

Any method may be used for producing the laminate of the present invention, as long as a core member can be integrated with a unidirectional fiber reinforced resin sheet via an adhesive layer.

A preferred method for producing the laminate includes the following steps: applying an adhesive on one or both of a unidirectional fiber reinforced resin sheet and a core member that includes a plurality of hollow structure units each having a shape of at least one member selected from the group consisting of cylinders, polygonal prisms, cones, polygonal pyramids, and combinations thereof; disposing the unidirectional fiber reinforced resin sheet on at least one of the front surface and the back surface of the core member via the adhesive; and heating the obtained stack to a temperature equal to or higher than the melting point of the adhesive.

In the producing method, when adhesive layers are applied on both the front surface and the back surface of the core member, and unidirectional fiber reinforced resin sheets are disposed on both the front surface and the back surface of the core member via adhesives, a laminate with a five-layer structure as illustrated in FIGS. 1A and 1B is obtained. On the other hand, when an adhesive layer is applied on only one of the front surface and the back surface of the core member, and a unidirectional fiber reinforced resin sheet is disposed on the one of the front surface and the back surface via the adhesive, a laminate with a three-layer structure is obtained.

In the step of applying an adhesive, the adhesive may be applied on, for example, the entire part or only a part of at least one of the front surface and the back surface of the core member; the entire part or only a part of the surface where the unidirectional fiber reinforced resin sheet is to be bonded; or the entire part or a part of the surfaces on both sides.

In the step of disposing the unidirectional fiber reinforced resin sheet, the position where the unidirectional fiber reinforced resin sheet is disposed is on at least one of the front surface and the back surface of the core member. The unidirectional fiber reinforced resin sheet may be disposed on the entire part or only a part of the at least one of the front surface and the back surface.

The temperature in the step of heating may be any temperature that is equal to or higher than the melting point of the adhesive. The heating temperature is preferably 40°C or higher, more preferably 60 to 140°C. Further, applying pressure as necessary is preferred during the heating. The pressure is preferably 0.1 to 10 MPa, more preferably 0.5 to 5 MPa. A pressure lower than 0.1 MPa may lower the adhesiveness. A pressure exceeding 10 MPa may cause the core member to buckle and collapse. The pressurization time is typically one to 10 minutes.

### Laminate Application

The laminate of the present invention may be used in any application. In particular, the laminate of the present invention having the configuration described above has specific physical properties suitable for specific applications (for example, transportation equipment applications, home appliances applications, and building applications), and is lightweight. In addition, the laminate of the present invention contains a thermoplastic resin as the resin component thereof, thus can be shaped into a three-dimensional shape unlike a laminate containing a thermosetting resin as the resin component thereof.

The laminate of the present invention is preferably used, for example, as an exterior material for an application selected from transportation equipment applications, home appliances applications, and building applications. Herein, the "exterior material" means a member that is disposed so as to separate an inside from an outside to protect the inside or the outside, and may or may not have a decorative purpose. The laminate of the present invention is preferably used for applications where high rigidity is required, but at the same time light weight is also required, for example, as a structural material for a moving body, a large structure, a temporary structure, or a protection of a high energy object. Examples of the high energy object include engines, motors, and high-performance batteries in transportation vehicles, and motors, compressors, and high-performance batteries in home appliances and communication devices. Large vehicles such as construction vehicles may also be considered as high energy objects themselves.

Specific examples of exterior materials used for transportation equipment applications include flooring materials, roofs, trunks, hoods, doors, and fenders of vehicles. Specific examples of exterior materials used in home appliances applications include personal computers, housings of tablets, washing machines, refrigerators, and televisions. Specific examples of exterior materials used for building applications include wall materials, partitions, flooring materials, ceiling materials, and doors. In particular, the laminate is extremely useful as an exterior material (for example, a flooring material, an under guard, or a mat guard of vehicles) which is located on a surface exposed to flying pebbles and other foreign objects, a soundproof wall, and a curing member at a construction site.

### Examples

Hereinafter, the present invention will be described in more detail with reference to examples. The materials used in the examples are as follows.

### Carbon Fiber

A carbon fiber bundle (product name: PYROFIL (registered trademark) TR50S12L, number of filaments 12,000, strand strength of 5,000 MPa and strand modulus of 242 GPa, manufactured by Mitsubishi Chemical Corporation) was immersed in acetone and subjected to ultrasonic waves for 10 minutes. Subsequently, the carbon fiber bundle was pulled out and washed three times with acetone, and then dried at room temperature for 8 hours to remove the adhering sizing agent.

### Production Example 1 (Production of Emulsion)

The following were mixed: as the propylene-based resin (A), 100 parts by mass of propylene/butene copolymer having a Shore D hardness of 52, a weight average molecular weight Mw measured by GPC of 350,000, and a melting point of 80°C; as the propylene-based resin (B), 10 parts by mass of maleic anhydride-modified propylene-based polymer having a weight average molecular weight Mw of 20,000, an acid value of 45 mg-KOH/g, maleic anhydride content of 4 mass%, and a melting point of 140°C; and as a surfactant, 3 parts by mass of potassium oleate. The obtained mixture was fed from the hopper of a twinscrew extruder (device name PCM-30, L/D = 40, manufactured by Ikegai Corp.) at a rate of 3,000 g/hour, and 20% aqueous solution of potassium hydroxide was continuously fed at a rate of 90 g/hour from a feed port provided in the vent section of the extruder. The mixture was continuously extruded at a heating temperature of 210°C. The extruded resin mixture was cooled to 110°C by using a static mixer with a jacket installed at the mouth of the extruder, and further fed into 80°C warm water to obtain an emulsion. The solid content concentration of the obtained emulsion was 45%.

The above-described maleic anhydride-modified propylene-based polymer was obtained by mixing 96 parts by mass of propylene/butene copolymer, 4 parts by mass of maleic anhydride, and 0.4 parts by mass of Perhexyne 25B (manufactured by NOF CORPORATION) as a polymerization initiator, and subjecting the mixture to the modification at a heating temperature of 160°C for 2 hours.

### Production Example 2 (Production of Unidirectional Fiber Reinforced Resin Sheet)

The emulsion obtained in production example 1 was allowed to adhere to the carbon fibers with the sizing agent removed therefrom by a roller impregnation method. The carbon fibers were then dried online at 130°C for 2 minutes to remove the low boiling point components to obtain a carbon fiber bundle. The adhesion amount of the emulsion was 0.87 mass%.

A resin composition containing the following components was the prepared: 66.7 parts by mass of the carbon fibers; and as the matrix resin (X) in total of 33.3 parts by mass, a commercially available unmodified propylene resin (product name: Prime Polypro (registered trademark) J106MG having a melting point of 160°C, manufactured by Prime Polymer Co., Ltd.) and a modified polypropylene obtained from grafting with 0.5 mass% maleic anhydride (the modified polypropylene has a melt flow rate of 9.1 g/10 min measured at 190°C and load 2.16 kg according to ASTM D1238 and a melting point of 155°C). A unidirectional fiber reinforced resin sheet having an average thickness of 160 µm was prepared from the resin composition by a conventional method. The conditions were adjusted so that the mass ratio of the unmodified propylene resin to the modified polypropylene was 90/10 (the weight average molecular weight corresponds to 330,000). The melting point of the resin was 160°C, the maleic anhydride content based on the entire resin composition was 0.023 mass%, the fiber volume fraction Vf was 0.5, and the density was 1.13 g/cm³.

The following is a method for evaluating the laminates of examples and comparative examples.

### Bending Test

The flexural modulus (MD direction) and flexural strength (MD direction) were measured according to JIS K7171.

### Example 1

### Production of Laminate of Two Unidirectional Fiber Reinforced Resin Sheets

Two unidirectional fiber reinforced resin sheets (200 × 200 mm) with a thickness of 160 µm obtained in production example 2 were stacked on a release film (polyimide film) in such a way that the fiber directions of the respective sheets are the same (0°). The stack was placed on a pressing device (product name: MINI TEST PRESS, manufactured by Toyo Seiki Seisaku-sho, Ltd.) set at 180°C. The stack was held for 3 minutes while a pressure of 8 MPa was applied thereon, and then the pressure was released. Immediately after the pressure was released, the stack was moved to a pressing device for cooling with cooling water at 20°C passing therethrough, and held for 1 minute while a pressure of 8 MPa was applied thereon, and then the pressure was released. Then, the stack was taken out from the device, and the release film was removed, thereby obtaining a laminate of two unidirectional fiber reinforced resin sheets (0°/0°). Hereinafter, this laminate is referred to as a "laminate of unidirectional fiber reinforced resin sheets (0°/0°)."

### Formation of Adhesive Layer

Liquid polyolefin-based adhesive (product name: UNISTOLE (registered trademark) XP01B with solid component of modified polypropylene and a melting point of 75°C, manufactured by Mitsui Chemicals, Inc.) on one surface of the laminate of unidirectional fiber reinforced resin sheets (0°/0°) was applied with a Mayer bar. The laminate with the adhesive was placed in an explosion-proof oven set at 100°C for 1 minute and dried to form an adhesive layer having a thickness of about 10 µm to 20 µm.

### Preparation of Core Member

A plate-shaped honeycomb member made of polypropylene resin (product name: TECCELL (registered trademark) T5-1300, manufactured by Gifu Plastic Industry Co., Ltd.) was cut to have a size of 200 × 200 mm, and used as a core member. The honeycomb member has the following properties: total thickness of 5.4 mm, weight of 1320 g/m², apparent density of 0.24 g/cm³, plane compression strength of 1.6 MPa, thickness of sheet constituting honeycomb (hollow structure wall material) of 0.2 mm, thickness of laminated sheet (covering sheet) of 0.3 mm, maximum width of cross-sectional shape of hollow structure unit within the range of 4 to 9 mm, and number of hollow structure units per unit area within the range of 14,000 to 72,000 pieces/m².

### Production of Laminate

A laminate of unidirectional fiber reinforced resin sheets (0°/0°) with an adhesive layer formed on one surface thereof is stacked on each of the front side surface and the back side surface of the core member in such a way that the adhesive layer was in contact with the core member. The fiber directions of the respective laminates of unidirectional fiber reinforced resin sheets (0°/0°) on the front side surface and the back side surface were the same direction. Release films were disposed on the outer surfaces of the respective laminates of unidirectional fiber reinforced resin sheets (0°/0°). The stack was placed on the pressing device set at 80°C, held for 1 minute s while a pressure of 1 MPa was applied thereon, and then the pressure was released. Immediately after the pressure was released, the stack was moved to the pressing device for cooling with cooling water at 20°C passing therethrough, and held for 3 minute while a pressure of 1 MPa was applied thereon, and then the pressure was released. Then, the stack was taken out from the device, and the release films were removed. As a result, a laminate in which the laminates of unidirectional fiber reinforced resin sheets (0°/0°) were integrated with the core member via the adhesive layers was obtained. The obtained laminate was a honeycomb sandwich plate having a layer structure of "laminate of unidirectional fiber reinforced resin sheets (0°/0°) / adhesive layer / core member (honeycomb member) / adhesive layer / laminate of unidirectional fiber reinforced resin sheets (0°/0°)," and having a thickness of 4.4 mm, and an apparent density of 0.48 g/cm³. In the thickness of the honeycomb sandwich plate of 4.4 mm, the thickness of the core member was 3.8 mm, and the thickness of each laminate of unidirectional fiber reinforced resin sheets was 0.3 mm. The thickness of the adhesive layer became extremely thin compared to the entire thickness of the laminate, thus was not measured (the same applies to examples 2 and 3 and comparative example 3 described below).

The flexural modulus of the honeycomb sandwich plate was 27,867 MPa, and the flexural strength thereof was 253 MPa.

### Example 2

### Production of Laminate of Two Unidirectional Fiber Reinforced Resin Sheets

Two unidirectional sheets (200 × 200 mm) with a thickness of 150 µm obtained in production example 2 were stacked on a release film (polyimide film) in such a way that the fiber directions of the respective sheet are orthogonal (0°/90°) to each other. The stack was press-molded under the same conditions and procedures as the method for producing of the laminate of unidirectional fiber reinforced resin sheets (0°/0°) of example 1, thereby obtaining a laminate of two unidirectional fiber reinforced resin sheets (0°/90°).

### Formation of Adhesive Layer

An adhesive layer was formed on one surface of the laminate of unidirectional fiber reinforced resin sheets (0°/90°) in the same manner as in example 1.

### Preparation of Core Member

The same polypropylene resin honeycomb member (200 × 200 mm) as in example 1 was used as the core member.

### Production of Laminate

A laminate in which the laminates of unidirectional fiber reinforced resin sheets (0°/90°) were integrated with the core member via the adhesive layers was obtained in the same manner as in example 1 except that the laminates of unidirectional fiber reinforced resin sheets (0°/90°) were used in place of the laminates of unidirectional fiber reinforced resin sheets (0°/0°). In each laminate of unidirectional fiber reinforced resin sheets (0°/90°), the fiber direction of the inner sheet was 90°, and the fiber direction of the outer sheet was 0°. The obtained laminate was a honeycomb sandwich plate having a layer structure of "laminate of unidirectional fiber reinforced resin sheets (0°/90°) / adhesive layer / core member (honeycomb member) / adhesive layer / laminate of unidirectional fiber reinforced resin sheets (90°/0°)," and having a thickness of 4.4 mm, and an apparent density of 0.48 g/cm³. In the thickness of the honeycomb sandwich plate of 4.4 mm, the thickness of the core member was 3.8 mm, and the thickness of each laminate of unidirectional fiber reinforced resin sheets was 0.3 mm.

The flexural modulus of the honeycomb sandwich plate was 18,133 MPa, and the flexural strength thereof was 118 MPa.

### Example 3

A laminate in which the laminates of unidirectional fiber reinforced resin sheets (0°/90°) were integrated with the core member via the adhesive layers was obtained in the same manner as in example 2 except that in place of the polypropylene resin honeycomb member, a plate-shaped singlecone member made of polypropylene resin (SINGLECONE (registered trademark), TSC-5-1003N, manufactured by UBE EXSYMO CO., LTD.) was cut to have a size of 200 × 200 mm, and used as a core member. The singlecone member has the following properties: total thickness of 5.1 mm, weight of 1,000 g/m², apparent density of 0.2 g/cm³, maximum width of cross-sectional shape of hollow structure unit within the range of 4 to 9 mm, number of hollow structure units per unit area within the range of 14,000 to 72,000 pieces/m². This laminate was a singlecone sandwich plate having a layer structure of "laminate of unidirectional fiber reinforced resin sheets (0°/90°) / adhesive layer / core member (singlecone member) / adhesive layer / laminate of unidirectional fiber reinforced resin sheets (90°/0°)," and having a thickness of 4.4 mm, and an apparent density of 0.41 g/cm³. In the thickness of the singlecone sandwich plate of 4.4 mm, the thickness of the core member was 3.8 mm, and the thickness of each laminate of unidirectional fiber reinforced resin sheets was 0.3 mm.

The flexural modulus of the singlecone sandwich plate was 12,543 MPa, and the flexural strength thereof was 87 MPa.

### Comparative Example 1

The bending test and a high rate impact test were performed on the same core member (plate-shaped honeycomb member made of polypropylene resin and having a thickness of 5.4 mm) alone as used in example 1 without using a unidirectional fiber reinforced resin sheet.

The flexural modulus of the core member (honeycomb member) was 369 MPa, and the flexural strength thereof was 8 MPa.

### Comparative Example 2

A laminate in which the laminates of unidirectional fiber reinforced resin sheets (0°/90°) were integrated with the core member was obtained in the same manner as in example 2 except the following: the laminate of unidirectional fiber reinforced resin sheets (0°/90°) is directly stacked on each of the surfaces of core members with no adhesive layer was formed on the surfaces of the laminates of unidirectional fiber reinforced resin sheets (0°/90°); and the set temperature of the pressing device was changed from 80°C to 180°C. The obtained laminate was a honeycomb sandwich plate having a layer structure of "laminate of unidirectional fiber reinforced resin sheets (0°/90°) / core member (honeycomb member) / laminate of unidirectional fiber reinforced resin sheets (90°/0°)," and having a thickness of 4.4 mm, and an apparent density of 0.39 g/cm³. In the thickness of the honeycomb sandwich plate of 4.4 mm, the thickness of the core member was 3.8 mm, and the thickness of each laminate of unidirectional fiber reinforced resin sheets was 0.3 mm.

On the surface of this honeycomb sandwich plate, there was an uneven pattern that seems to be the heat shrinkage of the honeycomb. In other word, no smooth surface was obtained.

The flexural modulus of the honeycomb sandwich plate was 6,805 MPa, and the flexural strength thereof was 46 MPa.

### Comparative Example 3

### Production of Discontinuous Fiber Reinforced Resin Sheet

A mold with a hole of 200 × 200 mm and made of a metal plate with a thickness of 300 µm was placed on a release film (polyimide film), and a discontinuous carbon fiber reinforced polypropylene-based resin (product name: PLASTRON (registered trademark) PP-CF40-11, having carbon fiber content of 40 wt% and density of 1.12 g/cm³, manufactured by Daicel Miraizu Ltd.) was placed in the mold. The stack was placed on the pressing device (product name: MINI TEST PRESS, manufactured by Toyo Seiki Seisaku-sho, Ltd.) set at 180°C. The stack was held for 1 minute while a pressure of 8 MPa was applied thereon, and then the pressure was released. Subsequently, the release film on the upper surface was peeled off, the sheet was folded in four, the release film was placed thereon again, and the operation of holding for 1 minute while applying a pressure of 8 MPa was repeated twice. Immediately after the operation, the stack was moved to the pressing device for cooling with cooling water at 20°C passing therethrough, and held for 1 minute while a pressure of 4 MPa was applied thereon, and then the pressure was released. Then, the stack was taken out from the device, and the release film was removed, thereby obtaining a discontinuous fiber reinforced resin sheet (200 × 200 mm) with a thickness of 0.3 mm was obtained.

### Formation of Adhesive Layer

An adhesive layer was formed on one surface of the discontinuous fiber reinforced resin sheet in the same manner as in example 1.

### Preparation of Core Member

The same polypropylene resin honeycomb member (200 × 200 mm) as in example 1 was used as the core member.

### Production of Laminate

A laminate in which the discontinuous fiber reinforced resin sheet were integrated with the core member via the adhesive layers was obtained in the same manner as in example 1 except that the discontinuous fiber reinforced resin sheets were used in place of the laminates of unidirectional fiber reinforced resin sheets (0°/0°), and the pressure application time in the pressing device set to 80°C was changed from 1 minute to 3 minutes. The obtained laminate was a honeycomb sandwich plate having a layer structure of "discontinuous fiber reinforced resin sheet / adhesive layer / core member (honeycomb member) / adhesive layer / discontinuous fiber reinforced resin sheet," and having a thickness of 4.4 mm, and an apparent density of 0.46 g/cm³. In the thickness of the honeycomb sandwich plate of 4.4 mm, the thickness of the core member was 3.8 mm, and the thickness of each discontinuous fiber reinforced resin sheet was 0.3 mm.

The flexural modulus of the honeycomb sandwich plate was 5,430 MPa, and the flexural strength thereof was 42 MPa.

### Comparative Example 4

### Production of Laminate of Two Unidirectional Fiber Reinforced Thermosetting Resin Sheets

Two unidirectional prepregs (200 × 200 mm, fiber volume fraction Vf of 55%, and a thickness of 150 µm) with carbon fibers (product name T300, manufactured by Toray Industries, Inc.) impregnated in epoxy resin are stacked in such a way that the fiber directions of the respective prepregs are orthogonal (0°/90°) to each other, and via release paper, two more unidirectional prepregs having the same properties are stacked in such a way that the fiber directions of the respective prepregs are orthogonal (90°/0°) to each other. The prepregs were cured in an autoclave. As a result, a laminate of unidirectional fiber reinforced thermosetting resin sheets (0°/90°) and a laminate of unidirectional fiber reinforced thermosetting resin sheets (90°/0°) were obtained.

### Formation of Adhesive Layer

A two-component epoxy-based adhesive (product name: TB2082C, manufactured by ThreeBond Co., Ltd.) is applied to have a thickness of about 50 µm on the surface-on the 90° side-of the laminate of unidirectional fiber reinforced thermosetting resin sheets (0°/90°).

### Preparation of Core Member

The same polypropylene resin honeycomb member (200 × 200 mm) as in example 1 was used as the core member.

### Production of Laminate

A laminate of unidirectional fiber reinforced thermosetting resin sheets (0°/90°) with an adhesive layer formed on one surface thereof is stacked on each of the front side surface and the back side surface of the core member in such a way that the adhesive layer was in contact with the core member. In each laminate of unidirectional fiber reinforced thermosetting resin sheets (0°/90°), the fiber direction of the inner sheet was 90°, and the fiber direction of the outer sheet was 0° as in example 2. The stack was then held for 30 minutes while a pressure of 1 MPa was applied thereon in a pressing device at room temperature. As a result, a laminate in which the laminates of unidirectional fiber reinforced thermosetting resin sheets (0°/90°) were integrated with the core member via the adhesive layers was obtained. The obtained laminate was a honeycomb sandwich plate having a layer structure of "laminate of unidirectional fiber reinforced thermosetting resin sheets (0°/90°) / adhesive layer / core member (honeycomb member) / adhesive layer / laminate of unidirectional fiber reinforced thermosetting resin sheets (90°/0°)," and having a thickness of 6.1 mm, and an apparent density of 0.31 g/cm³. In the thickness of the honeycomb sandwich plate of 6.1 mm, the thickness of the core member was 5.4 mm, and the thickness of each laminate of unidirectional fiber reinforced thermosetting resin sheets was 0.35 mm. The thickness of the unidirectional fiber reinforced thermosetting resin sheet includes the thickness of the adhesive layer.

The flexural modulus of the honeycomb sandwich plate was 1,927 MPa, and the flexural strength thereof was 18 MPa.

The above results are shown in Tables 1 and 2.

**Table 1**

| | | Example 1 | Example 2 | Example 3 | Comparative example 1 | Comparative example 2 | Comparative example 3 | Comparative example 4 |
|---|---|---|---|---|---|---|---|---|
| Fiber reinforced resin sheet | Type | UDS (P) | UDS (P) | UDS (P) | None | UDS (P) | RS | UDS (S) |
| | Density (g/cm³) | 1.31 | 1.31 | 1.31 | | 1.31 | 1.12 | 1.5 |
| | Thickness (mm) | 0.3 | 0.3 | 0.3 | | 0.3 | 0.3 | 0.3 |
| Adhesive layer | Type | PO | PO | PO | None | None | PO | EP |
| Core member | Type | HNC | HNC | SCC | HNC | HNC | HNC | HNC |
| | Thickness (mm) | 5.4 | 5.4 | 5.1 | 5.4 | 5.4 | 5.4 | 5.4 |
| Press molding temperature (°C) | | 80 | 80 | 80 | - | 180 | 80 | Room temperature |
| Laminate | Layer structure | 0° UDS (P) | 0° UDS (P) | 0° UDS (P) | | | | 0° UDS (S) |
| | | 0° UDS (P) | 90° UDS (P) | 90° UDS (P) | | 0° UDS (P) | RS | 90° UDS (S) |
| | | PO | PO | PO | | 90° UDS (P) | PO | EP |
| | | HNC | HNC | SCC | HNC | HNC | HNC | HNC |
| | | PO | PO | PO | | 90° UDS (P) | PO | EP |
| | | 0° UDS (P) | 90° UDS (P) | 90° UDS (P) | | 0° UDS (P) | RS | 90° UDS (S) |
| | | 0° UDS (P) | 0° UDS (P) | 0° UDS (P) | | | | 0° UDS (S) |
| | Thickness (mm) | 4.4 | 4.4 | 4.4 | 5.4 | 4.4 | 4.4 | 6.1 |
| | Apparent density (g/cm³) | 0.48 | 0.48 | 0.41 | 0.24 | 0.39 | 0.46 | 0.31 |

The abbreviations in Table 1 have the following meanings.
"UDS (P)": Unidirectional fiber reinforced resin sheet (thermoplastic resin)
"UDS (S)": Unidirectional fiber reinforced resin sheet (thermosetting resin)
"RS": Discontinuous fiber reinforced resin sheet
"PO": Polyolefin-based adhesive layer
"EP": Epoxy-based adhesive layer
"HNC": Honeycomb member (core member)
"SCC": Singlecone member (core member)

**Table 2**

| | | Example 1 | Example 2 | Example 3 | Comparative example 1 | Comparative example 2 | Comparative example 3 | Comparative example 4 |
|---|---|---|---|---|---|---|---|---|
| Bending test | Flexural modulus (Mpa) (MD direction) | 27,867 | 18,133 | 12,543 | 369 | 6,805 | 5,430 | 1,927 |
| | Flexural strength (Mpa) (MD direction) | 253 | 118 | 87 | 8 | 46 | 42 | 18 |

### Evaluation

As is clear from the above results, the laminates of examples 1 to 3 had excellent bending characteristics.

On the other hand, the core member (plate-shaped honeycomb member) alone of comparative example 1 was inferior in bending characteristics as compared to the laminates of examples 1 to 3.

As the laminate of comparative example 2 was obtained by directly stacking laminates of fiber reinforced resin sheets on a core member without using an adhesive and press-molding the stack, the laminate was inferior in bending characteristics as compared to the laminates of examples 1 to 3.

As the laminate of comparative example 3 was obtained by using discontinuous fiber reinforced resin sheets in place of laminates of unidirectional fiber reinforced resin sheets, the laminate was inferior in bending characteristics as compared to the laminates of examples 1 to 3.

As the laminate of comparative example 4 was obtained by using unidirectional fiber reinforced thermosetting resin sheets in place of laminates of unidirectional fiber reinforced resin sheets, the laminate was inferior in bending characteristics as compared to the laminates of examples 1 to 3.

### Industrial Applicability

The laminate of the present invention is useful for an application selected from transportation equipment applications, home appliances applications, and building applications, in particular, extremely useful as an exterior material (for example, a flooring material, an under guard, or a mat guard of vehicles) which is located on a surface exposed to flying pebbles and other foreign objects, a soundproof wall, and a curing member at a construction site.

### Reference Signs List

1 Laminate
11 Core member
11a Hollow structure unit
11b Hollow structure wall material
11c Covering sheet
12 Adhesive layer
13a Unidirectional fiber reinforced resin sheet
13b Unidirectional fiber reinforced resin sheet
W Maximum width of cross-sectional shape

## Claims

1. A laminate comprising:
a core member including a plurality of hollow structure units each having a shape of at least one member selected from the group consisting of cylinders, polygonal prisms, cones, polygonal pyramids, and combinations thereof, wherein a cross-sectional shape of each of the plurality of hollow structure units has a maximum width of 3 to 15 mm;
an adhesive layer disposed on at least one of a front surface and a back surface of the core member; and
a unidirectional fiber reinforced resin sheet disposed in contact with the adhesive layer, the unidirectional fiber reinforced resin sheet containing a thermoplastic resin.

2. The laminate according to claim 1, wherein the core member has a thickness of 3 to 30 mm.

3. The laminate according to claim 1, wherein the core member and the adhesive layer each contain a thermoplastic resin.

4. The laminate according to claim 3, wherein the thermoplastic resins includes a polyolefin-based thermoplastic resin.

5. The laminate according to claim 1, wherein the core member includes a covering sheet that covers openings of at least one of the plurality of hollow structure units, the openings being on sides of the front surface and the back surface of the core member.

6. The laminate according to claim 1, wherein the number of hollow structure units of the core member per unit area is 5,600 to 111,200 pieces/m².

7. The laminate according to claim 1, wherein a fiber in the unidirectional fiber reinforced resin sheet includes a carbon fiber.

8. The laminate according to claim 1, wherein the laminate has a flexural modulus of 10 to 100 GPa.

9. The laminate according to claim 1, wherein the adhesive layer is disposed on each of the front surface and the back surface of the core member, and the unidirectional fiber reinforced resin sheet is disposed in contact with the adhesive layer.

10. A method for producing the laminate according to claim 1, the method comprising:
applying an adhesive on one or both of a core member and a unidirectional fiber reinforced resin sheet, wherein the core member includes a plurality of hollow structure units each having a shape of at least one member selected from the group consisting of cylinders, polygonal prisms, cones, polygonal pyramids, and combinations thereof, a cross-sectional shape of each of the plurality of hollow structure units has a maximum width of 3 to 15 mm, and the unidirectional fiber reinforced resin sheet contains a thermoplastic resin;
disposing the unidirectional fiber reinforced resin sheet on at least one of a front surface and a back surface of the core member via the adhesive; and
performing heating to a temperature equal to or higher than a melting point of the adhesive.
